Europäisches Patentamt

European Patent Office

Office européen des brevets

(19)

(11) Veröffentlichungsnummer: **0 223 983 B1**

(12) **EUROPÄISCHE PATENTSCHRIFT**

(45) Veröffentlichungstag der Patentschrift: **18.03.92**

(51) Int. Cl.⁵: **C05D 11/00**, C05G 1/00, B01J 2/28

(21) Anmeldenummer: **86113772.7**

(22) Anmeldetag: **04.10.86**

(54) **Verfahren zum Granulieren von Gesteins- und Schlackenmehl mit Kieserit.**

(30) Priorität: **21.11.85 DE 3541184**

(43) Veröffentlichungstag der Anmeldung:
**03.06.87 Patentblatt 87/23**

(45) Bekanntmachung des Hinweises auf die
Patenterteilung:
**18.03.92 Patentblatt 92/12**

(84) Benannte Vertragsstaaten:
**BE CH FR GB LI LU NL**

(56) Entgegenhaltungen:
**DD-A- 154 329**
**DE-B- 1 258 878**
**DE-B- 1 272 317**

(73) Patentinhaber: **KALI + SALZ AG**
**Friedrich-Ebert-Strasse 160**
**W-3500 Kassel(DE)**

(72) Erfinder: **Bruns, Günter**
**Vogelkamp 9**
**W-3015 Wennigsen(DE)**

Rank Xerox (UK) Business Services

EP 0 223 983 B1

**Beschreibung**

Gesteins- und Schlackenmehle werden in vielfacher Weise als Düngemittel eingesetzt, um dem Boden Erdalkalien, Phosphat und aktive Kieselsäure zuzuführen. Diesen Produkten kommt eine milde, neutralisierende Wirkung zu. Da die auf Oberflächeneinheit bezogene Lösungsgeschwindigkeit bei diesen Produkten meistens extrem niedrig ist, müssen sie zur Erhöhung der auf die Masseneinheit bezogenen Oberfläche sehr fein gemahlen werden, um einen ausreichenden Nährstofffluß zu gewährleisten. Beispielsweise ist bei phosphathaltiger Schlacke aus der Stahlgewinnung eine Aufmahlung vorgeschrieben, nach welcher mindestens 96 % des Mahlgutes ein Sieb mit einer lichten Maschenweite von 0,63 mm und mindestens 75 % ein solches mit einer Weite von 0,16 mm passieren müssen.

Diese Mahlfeinheit hat auf der anderen Seite auch wieder große Nachteile, z.B. Stauben beim Umschlagen und Ausbringen, aber auch wegen Fehlens für Staub geeigneter Ausbringungsgeräte. Die angesprochenen Mängel versucht man durch Granulieren der Gesteins- bzw. Schlackenmehle zu beheben. Hierzu sind eine Reihe von Verfahren und Rezepturen bekannt geworden. Zu nennen sind hier die DE-PS 12 63 033; 12 58 878; 12 72 317; 12 72 939; 15 92 614; 22 03 684; 22 04 415; DD-PS 222 711; 222 712; 222 713; BE-PS 627 633.

An die aus den Gesteins- bzw. Schlackenmehlen hergestellten Granalien müssen jedoch ganz bestimmte Anforderungen gestellt werden. Sie sollen eine hohe Berst- und Abriebfestigkeit aufweisen, um beim Umschlagen und Ausbringen möglichst keinen umweltbelästigenden Staub zu entwickeln; andererseits aber sollen sie im Kontakt mit dem feuchten Boden rasch in die Primärteilchen zerfallen, um eine ausreichende Nährstoffabgabe zu gewährleisten.

In vielen Rezepten werden Mischungen aus Branntkalk und Ton, in anderen auch organische Produkte, wie Stärke u.ä., als Granulierhilfsmittel verwendet. Bei ersteren hat man mit dem Nachteil der schlechten Zerfallbarkeit der Granalien im Boden zu rechnen, und bei letzterem stehen meistens die hohen Beschaffungskosten der Hilfsmittel der praktischen Anwendung entgegen.

Es ist auch schon vorgeschlagen worden, Kieserit (natürliches Magnesiumsulfat-Monohydrat) als Granulierhilfsmittel zu verwenden.

So werden nach DE-PS 12 63 033 und 12 72 317 einem hydroxylapatitischen Rohphosphatmehl 1 - 5 % Kieserit zum Granulieren zugesetzt. Nach der DE-PS 12 58 878 wird die Granulierbarkeit von Thomasphosphatdüngemitteln durch Zusatz von 0,5 - 4 % Kieseritstaub verbessert.

Auch in der DE-PS 12 72 939 wird Kieserit in Einsatzmengen bis zu 5 % als Granulierhilfsmittel vorgeschlagen, wenn auch nur für wasserlösliche Dünger.

Um den Effekt zu verbessern, wird in der DE-PS 22 03 684 vorgeschlagen, statt mit Kieserit als Granulierhilfsmittel mit kalziniertem Kieserit in Einsatzmengen bis zu 20 % zu arbeiten. Soweit sich diese Vorschläge auf das Granulieren von Gesteins- bzw. Schlackenmehlen beziehen, ist festzustellen, daß kalzinierter Kieserit sich im technischen Verfahren wegen zu schnellen Abbindens nicht eignet. Die vollkommene Umwandlung des kalzinierten Kieserits in das Heptahydrat Bittersalz ist bei größeren Anteilen des Hilfsmittels an der Granuliermischung auch deswegen unerwünscht, weil das Bittersalz beim Trocknen der Granalien mindestens teilentwässert wird. Beim Entwässern des Bittersalzes werden die Kristallbrücken, welche den Granalienverband stabilisieren, zerstört.

Die anderen Vorschläge basieren auf dem natürlichen Kieserit. Anteile bis zu 5 % an der Granuliermischung zeigen zwar eine günstige Wirkung beim Aufbau der Granalien, haben aber keinerlei Einfluß auf die Zerfallbarkeit der Granalien im Boden, wenn die Granalien nicht auch noch andere wasserlösliche Düngesalze enthalten.

Es ist weiterhin gemäß DD-A-154329 ein Verfahren zum Granulieren von Gesteinsmehl (Phosphorit) bekannt, wonach eine Mischung aus Phosphorit und Kieserit im Mengenverhältnis von 1:0,75 und einer Korngröße von weniger als 0,1 mm unter Wasserzusatz auf einem Teller granuliert wirxd. Es werden dabei Granalien erhalten, die eine Druckfestigkeit von 35 M und eine Abriebfestigkeit von über 95 % aufweisen.

Es wurde nun ein Verfahren zum Granulieren von Gesteins- und Schlackenmehl gefunden, wobei dem Gesteins- und Schlackenmehl Kieserit zugesetzt und die Mischung auf eine Korngröße unter 0,1 mm gemahlen und dann unter Zusatz von Wasser granuliert wird, das dadurch gekennzeichnet, ist, daß eine Frischgutmischung von höchstens 80 % Gesteins- und Schlackenmehl mit einer Körnung von mindestens 75 % unter 0,16 mm und mindestens 20 % staubfein gemahlenem Kieserit mit einer Körnung von mindestens 80 % unter 0,09 mm in Gegenwart von Rückgut mit Wasser bis zum einsetzenden Granalienaufbau befeuchtet wird und dann diese Mischung unter Aufdüsen einer kleineren Wassermenge als der vorherigen auf dem Teller oder in der Drehtrommel zu Granalien gerollt wird, und dann die Granalien auf eine Restfeuchte von 1 -2 % getrocknet werden und aus dem getrockneten Granulat das Gutkorn ausgesiebt und ausgeführt wird und dann das Fehlkorn nach Aufmahlung als Rückgut der Ausgangsmischung 1 zugeführt wird.

Weiterhin wurde gefunden, daß es sich bewährt hat, zur Stabilisierung der Restfeuchten gegen Übertrocknung mindestens 0,3 % Magnesiumchlorid, bezogen auf die trockene Granuliermischung, zuzusetzen.

Die nach der Rezeptur der Erfindung hergestellten Granalien haben eine Berstfestigkeit von über 30 N/Korn und einen Abrieb von höchstens 5 %. Diese Werte liegen weitaus günstiger als bei Granalien, welche nach den eingangs aufgeführten Verfahren hergestellt worden sind. Trotz dieser für diese Düngemittelart hohen Granalienfestigkeit ist der Zerfall in Wasser (als Test für den Zerfall im Boden) außerordentlich schnell.

Durch dieses Verhalten der Granalien ist das Freilegen der großen Oberfläche der Primärteilchen des Düngemittels nach dem Ausbringen auf dem Boden gewährleistet. Der relativ große Kieseritanteil am granulierten Produkt hat den zusätzlichen Vorteil, daß außer dem relativ langsam wirkenden Magnesium aus dem Gesteins- bzw. Schlackenmehl relativ schnell wirkendes, wasserlösliches Magnesiumsalz zur Verfügung steht, was bei akuten Mangelzuständen bedeutsam ist.

Eine Auswahl von Rezepturen (12 Beispiele) des erfindungsgemäßen Verfahrens zeigt die nachfolgende Tabelle. Diese enthält unter Nr. 5 zum Vergleich auch eine Rezeptur, in welcher die Hälfte des Kieserits ungemahlen mit einer mittleren Körnung von 0,4 mm eingesetzt worden ist. Obwohl im Beispiel 5 mehr als die als Untergrenze vorgeschlagenen 20 % Kieserit zur Mischung zugesetzt worden sind, resultiert wegen der relativ groben Körnung der einen Kieserithälfte eine wesentlich geringere Abriebfestigkeit als im Beispiel 2, in welchem der gesamte Kieserit staubfein gemahlen war.

Aus den Beispielen geht hervor, daß nicht nur der Mengenanteil des Kieserits an der Mischung von Bedeutung ist, sondern auch dessen Aufmahlung. Die Grobanteile des Kieserits sind bezüglich ihrer Wirkung auf die Abrieb- und Berstfestigkeit nahezu wirkungslos.

## Beispiele

|                    |        | 1   | 2   | 3   | 4   | 5   | 6   |
|--------------------|--------|-----|-----|-----|-----|-----|-----|
| Thomasphosphat     | g      | 870 | 815 | 785 | 765 | 765 | 725 |
| Kieserit, gemahlen | g      | 120 | 170 | 200 | 220 | 110 | 260 |
| Kieserit           | g      |     |     |     |     | 110 |     |
| $MgCl_2$           | g      |     | 3   | 3   |     |     |     |
| Granulierwasser    | g      | 125 | 125 | 115 | 115 | 120 | 115 |

## Qualitätsprüfung

### Testkorn 2 - 3,15 mm

|           |        | 1  | 2  | 3  | 4  | 5  | 6  |
|-----------|--------|----|----|----|----|----|----|
| Abrieb    | %      | 28 | 16 | 5  | 3  | 32 | 3  |
| Berstfeste| N/Korn | 16 | 20 | 34 | 41 | 13 | 46 |

EP 0 223 983 B1

Beispiele

|  | | 7 |  | | | 8 |  | | | 9 |
|---|---|---|---|---|---|---|---|---|---|---|
| Hüttenkalk | g | 780 | Dolomitsteinmehl | g | 740 | Mergelmehl | g | 780 |
| Kieserit, gemahlen | g | 210 | Kieserit, gemahlen | g | 250 | Kieserit, gemahlen | g | 210 |
| Granulierwasser | g | 150 | Granulierwasser | g | 145 | Granulierwasser | g | 155 |

Qualitätsprüfung

Testkorn 2 - 3,15 mm

| | | 7 | 8 | 9 |
|---|---|---|---|---|
| Abrieb | % | 5 | 3 | 2 |
| Berstfeste | N/Korn | 31 | 33 | 36 |

EP 0 223 983 B1

**Beispiele**

| | | 10 | 11 | 12 |
|---|---|---|---|---|
| Dolomitmehl | g | 200 | 500 | |
| Thomasphosphat | g | | | 350 |
| Kieserit, gemahlen | g | 800 | 500 | 650 |
| Granulierwasser | g | 155 | 160 | 145 |
| Qualitätsprüfung Testkorn 2–3,15 mm | | | | |
| Abrieb | % | 3 | 2 | 5 |
| Berstfeste | N/Korn | 32 | 38 | 31 |

## Patentansprüche

1. Verfahren zum Granulieren von Gesteins- und Schlackenmehl, wobei dem Gesteins- und Schlackenmehl Kieserit zugesetzt und die Mischung auf eine Korngröße unter 0,1 mm gemahlen und dann unter Zusatz von Wasser granuliert wird, dadurch gekennzeichnet, daß eine Frischgutmischung von höchstens 80 % Gesteins- und Schlackenmehl mit einer Körnung von mindestens 75 % unter 0,16 mm und mindestens 20 % staubfein gemahlenem Kieserit mit einer Körnung von mindestens 80 % unter 0,09

6

mm in Gegenwart von Rückgut mit Wasser bis zum einsetzenden Granalienaufbau befeuchtet wird und dann diese Mischung unter Aufdüsen einer kleineren Wassermenge als der vorherigen auf dem Teller oder in der Drehtrommel zu Granalien gerollt wird, und dann die Granalien auf eine Restfeuchte von 1 -2 % getrocknet werden und aus dem getrockneten Granulat das Gutkorn ausgesiebt und ausgeführt wird und dann das Fehlkorn nach Aufmahlung als Rückgut der Ausgangsmischung 1 zugeführt wird.

2. Verfahren nach Anspruch 1, dadurch gekennzeichnet, daß der Frischgutmischung mindestens 0,3 % ihres Trockengewichts Magnesiumchlorid, gelöst im Granulierwasser, zugesetzt wird.

**Claims**

1. Process for granulating rock and slag flour, in which kieserite is added to the rock and slag flour and the mixture is ground to a grain size of less than 0.1 mm and then granulated with the addition of water, characterised in that a fresh material mixture of at most 80% rock and slag flour having a grain size range of at least 75% below 0.16 mm and at least 20% kieserite ground as fine as dust with a grain size range of at least 80% below 0.09 mm is moistened with water in the presence of returns until decomposition of the granules begins, and then this mixture is rolled into granules on a plate or in a rotary drum with a smaller quantity of water than the previous quantity being sprayed on, and then the granules are dried to a residual moisture content of 1-2% and the good size is sieved out and taken away from the dried granulated material and then the outsize is supplied as returns to the starting mixture 1 after grinding.

2. Process according to Claim 1, characterised in that an amount of magnesium chloride corresponding to at least 0.3% of the dry weight of the fresh material mixture and being dissolved in granulating water is added to the mixture.

**Revendications**

1. Procédé de granulation de poudre de roche et de scorie par adjonction de kiesérite à la poudre de roche et de scorie et par broyage du mélange jusqu'à une granulométrie inférieure à 0,1 mm, puis par granulation avec addition d'eau, caractérisé en ce qu'il consiste à humidifier, par de l'eau, en présence de produits recyclés et jusqu'à formation des granules à utiliser, un mélange de produits frais d'au plus 80 % de poudre de roche et de scorie, d'une granulométrie à au moins 75 % inférieure à 0,16 mm, et d'au moins 20 % de kiesérite broyée à la finesse de la poussière, d'une granulométrie à 80 % au moins inférieure à 0,09 mm, puis à transformer ce mélange en granules sur un plateau ou dans un tambour tournant, en projetant une quantité d'eau plus grande que la précédente et ensuite, à sécher les granules jusqu'à une humidité résiduelle de 1 à 2 % et à séparer par tamisage le bon grain du granulé séché et à l'évacuer, et ensuite, à envoyer le mauvais grain, après broyage, en tant que produit recyclé, au mélange de départ.

2. Procédé suivant la revendication 1, caractérisé en ce qu'il consiste à ajouter au mélange de produits frais au moins 0,3 % de son poids sec de chlorure de magnésium dissous dans l'eau de granulation.